# EUROPEAN PATENT SPECIFICATION

(11) **EP 3 162 954 B1**
(45) Date of publication and mention of the grant of the patent: **26.09.2018**
(21) Application number: 16195612.3
(22) Date of filing: 25.10.2016
(51) Int. Cl.: D06Q 1/00, B29C 65/60, B29C 65/78, G09F 7/06

(54) **METHOD AND MACHINE FOR MOUNTING A SET OF GRAPHIC ELEMENTS ON A BODY**
VERFAHREN UND MASCHINE ZUR MONTAGE EINES SATZES GRAFISCHER ELEMENTE AUF EINEM KÖRPER
PROCÉDÉ ET MACHINE DE MONTAGE D'UN ENSEMBLE D'ÉLÉMENTS GRAPHIQUES SUR UN CORPS

(30) Priority: 26.10.2015 IT UB20154790
(43) Date of publication of application: 03.05.2017
(73) Proprietor: Serughetti, Massimo, 24064 Grumello de Monte (BG) (IT)
(72) Inventor: Serughetti, Massimo, 24064 Grumello de Monte (BG) (IT)
(74) Representative: Negrini, Elena

(56) References cited:
- EP-A1- 2 151 169
- EP-A1- 2 434 471
- EP-A2- 2 276 015
- GB-A- 1 123 797

## Description

The present invention relates to the field of machines for mounting a set of graphical elements on a body.

It is in common use to apply on fabrics, non-woven fabrics, leather or leather and substitutes, plastic sheets, cardboard or metal sheet and the like, graphic elements or symbol or set of graphical elements such as a set of characters or logos.

These sets of graphics elements are usually applied by gluing or seams, and in some cases by rivets or punching.

To simplify the application process by punching or riveting the back of the characters are usually joined together by a single plate, this brings to the problem of making an inflexible element.

It is also possible to rivet each single element that composes the symbol or characters by repeating the processes of riveting for each element, so as to maintain a good elasticity and/or flexibility of the fabric.

This system poses considerable problems relating to working time and the costs thereof, in addition to the complexity of the machining having to align and to apply each individual symbol or character in succession.

There are machines which allow the contemporary riveting of multiple graphical elements using a frame that supports the graphic elements, so as to reduce the inconveniences related to misalignment, but the graphic elements must be inserted manually and this increases the machining time.

Alternatively to these frames, there are printed strings which include in addition to the graphic elements a support frame, so as to be able to carry out the riveting process more quickly, the operator must then manually disconnect the support frame from the graphic elements.

These known systems provide for a series phases of realization described in the following:
- a first step of interlocking of an upper string with the graphic elements on one side of a press by flaps or retaining springs;
- a second step of interlocking of a lower string support to the graphic elements on the opposite side of the press by further flaps or retaining springs;
- a third step of positioning the fabric between the two sides of the press;
- a fourth step of alignment of the upper string with the lower one;
- a fifth step of closing the press that allows the riveting of the graphic elements;
- a sixth step of opening the press;
- a seventh step of extraction of the working;
- an eighth step of breaking the string support elements from the graphic elements.

Prior art document n. EP 2151169 discloses a method for affixing strings of alphanumeric characters or symbols on fabrics, string of alphanumeric characters or symbols, comprising the steps:
- first step of positioning a string of alphanumeric characters, symbols or the like in bas-relief on a first presser of a press;
- second step of positioning a string of supporting elements on a second presser of the press that correspond to the alphanumeric characters, symbols or the like in bas-relief;
- a third step of positioning a fabric onto which the alphanumeric characters, symbols or the like in bas-relief are to be fixed between the first and second pressers;
- press closing step for pressing the alphanumeric characters, symbols or the like in bas-relief on the corresponding supporting elements with the fabric interposed for the mutual fixing of the alphanumeric characters, symbols or the like in bas-relief with the corresponding supporting elements;
- step of opening the press in order to extract the fabric from the press.

Document n. EP 2434471 discloses a method for mounting strings of alphanumeric characters or symbols on fabrics, and related string, comprising the steps:
- first step of positioning a string of alphanumeric characters or symbols in low-relief on a first presser of a press;
- second step of positioning a string of supporting elements on a second presser of the press which correspond to the alphanumeric characters or symbols in low-relief;
- third step of positioning a fabric onto which the alphanumeric characters or symbols in low-relief are to be fixed between the first and second pressers;
- press closing step for pressing the alphanumeric characters or symbols in low-relief onto the corresponding supporting elements with the fabric interposed for the mutual fixing of the alphanumeric characters or symbols in low-relief with the corresponding supporting elements;
- press opening step for extracting the fabric from the press, wherein the alphanumeric characters or symbols are mounted prior to the first step in a first mounting template, which defines a plurality of mutually independent seats, one for each one of the alphanumeric characters or symbols, the first mounting template being removable once the characters have been fixed, and in that a second mounting template is provided, which defines a plurality of mutually independent seats, one for each one of the supporting elements that correspond to the alphanumeric characters or symbols, the second mounting template being removable once the characters or symbols have been fixed.

Document n. EP 2276015 discloses a method and machine for clamping plates on sheet material, a pre-plate and a plate, comprising the step of providing a plate and a counter-plate, the plate comprising a plurality of pin supporting elements bearing, on a non exposed to the view rear side thereof a plurality of pins for engagement each in a corresponding hole of the counter-plate, the method further comprises the step of providing a pre-plate including a plurality of temporary attachment points on non exposed to the view parts of said elements.

Document n. GB 1123797 discloses improvements in decorative bodies and decorative strip material incorporating them. A flat sheet material consisting of textile, metal or synthetic resin threads, produced by weaving, lace or net production, or knitting, or of leather, metal strips, wood, synthetic resins has mounted thereon synthetic resin bodies in such a manner that projections formed on these bodies on their rear side are passed through the flat sheet material and are deformed in the manner of rivets on the rear side. The bodies may comprise mountings carrying glass, jewels or reflector elements. The projections may comprise pins, pegs, lugs. Passages for the projections may be prepared by punching, pressing, drilling. The riveting is obtained by heat deformation of the projections. The bodies may be connected by threads or webs to form an ornamental group or strip of decorative bodies before attaching to the sheet material. Some or all of the connecting threads or webs may be removed before attaching the material. Decorative bodies in the form of mountings and supporting gem stores and are fastened on the supporting material. The mounting of each body is formed at its underside with a pin which is deformed on the underside of the supporting material to form a rivet.

A disadvantage of these known machines is the complexity of the operations that must carry out the riveting elements operator.

Another disadvantage of the known machines is the difficulty to pull the string support elements from the graphic elements.

Other disadvantages of the known machines is the presence of deformations on the graphics elements due to improper posting of graphic elements.

A further disadvantage of the known machines is the presence of residues of processing due to mistaken detachment that lead to ruin the fabric.

Other disadvantages of the known machines is the inability to automate the machining process.

An object of the present invention is to propose a machine which reduces the operations of riveting of the elements.

A further object of the present invention is to propose a machine which detaches the support elements from graphic elements.

A further object of the present invention is to propose a machine which reduces the deformations on the graphics elements.

A further object of the present invention is to propose a machine which can automate the machining process.

The characteristics of the invention are highlighted in the following with particular reference to the attached drawings in which:
- Figure 1 shows an exploded perspective view of the machine;
- Figure 2 shows a section view of a plate and of a counter-plate of figure 1 in a positioning step into support means respectively first and second;
- Figure 3 shows the elements and means of figure 2 in an alignment step and where a fabric is interposed;
- Figure 4 shows the elements and means of figure 3 in an engagement step of the projecting legs of the plate with the seats of the counter-plate;
- Figure 5 shows the elements and means of figure 4 in a step of breaking of the peduncles and fixing of the graphic elements of the plate with the abutment means of the counter-plate;
- Figure 6 shows a step of expulsion of the abutment means;
- Figure 7 shows an extraction step of the fabric with the graphic elements fixed to it;
- Figure 8 shows a perspective view of the extraction step of the frames.

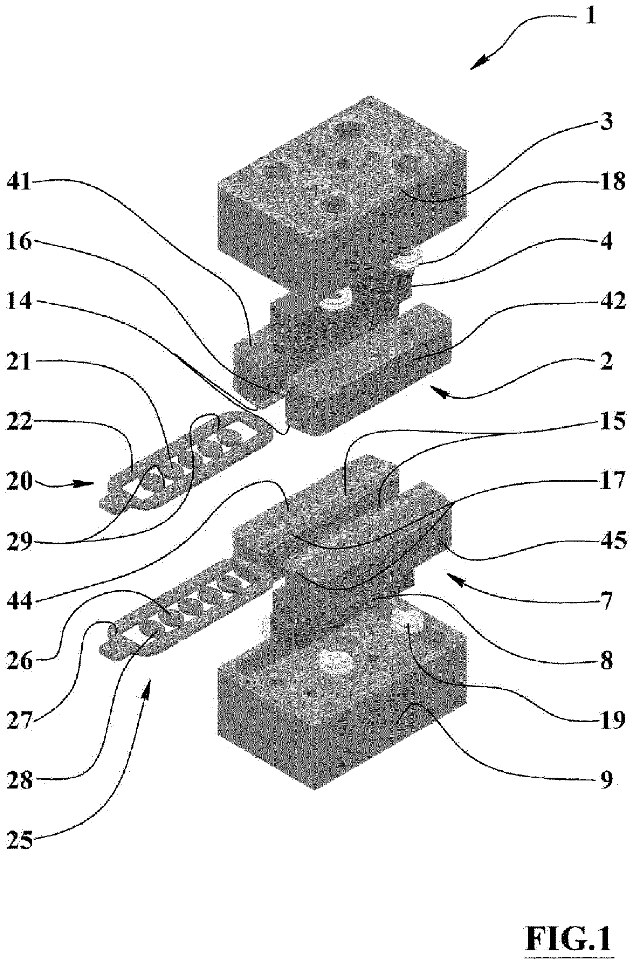

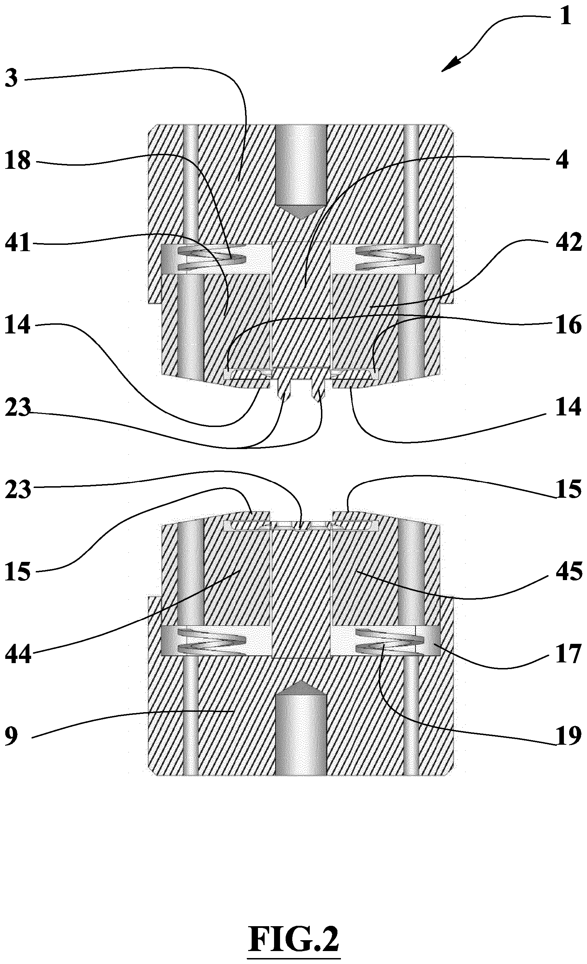

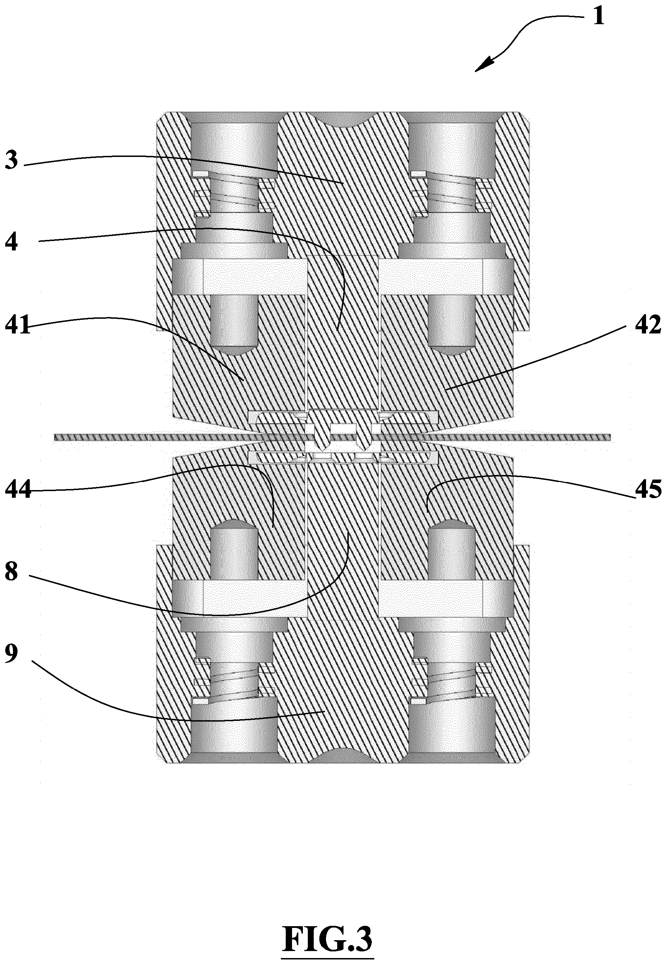

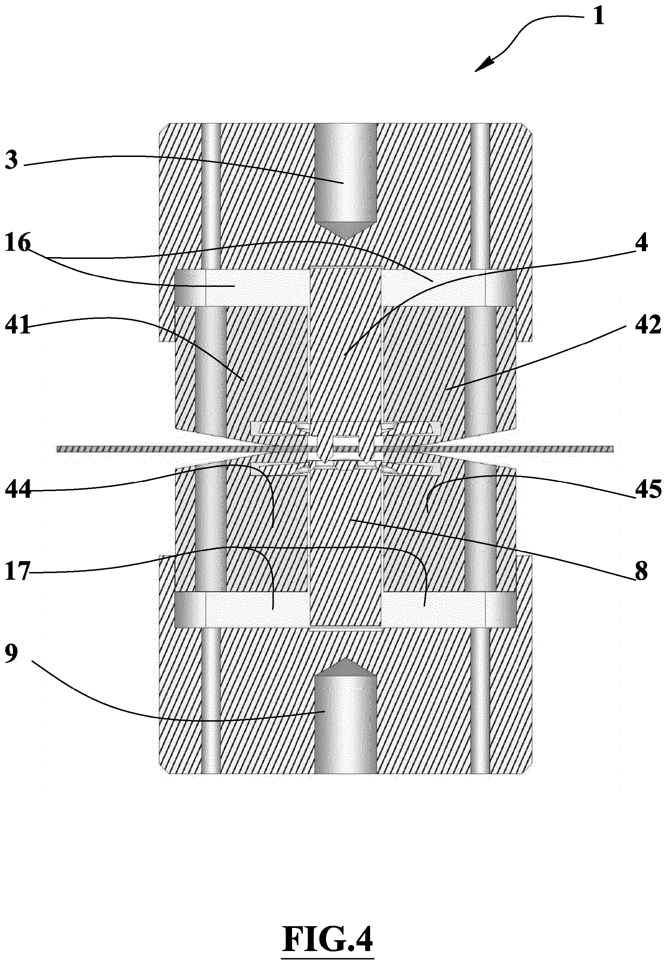

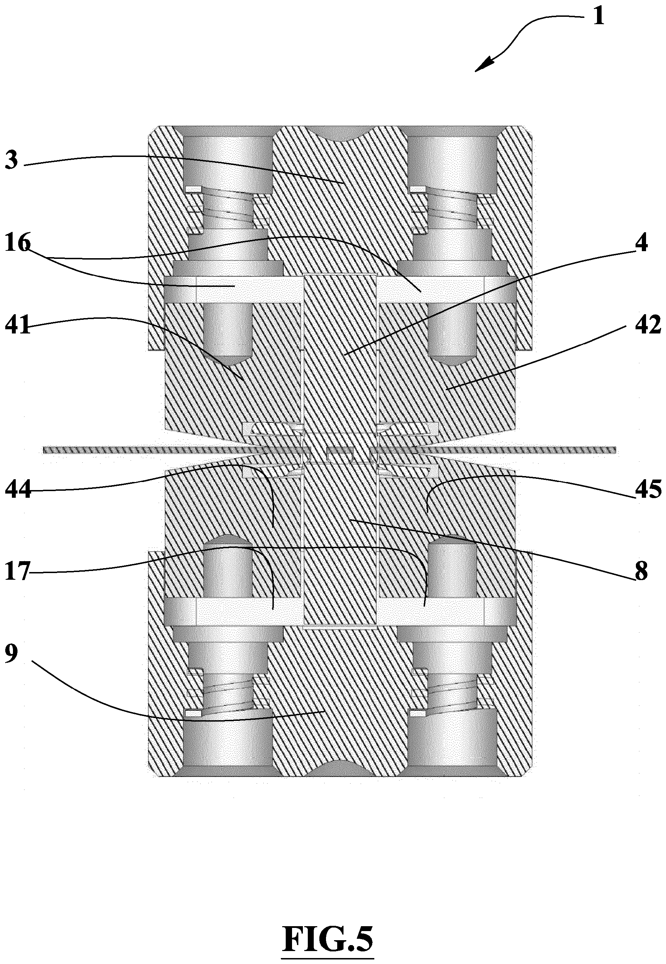

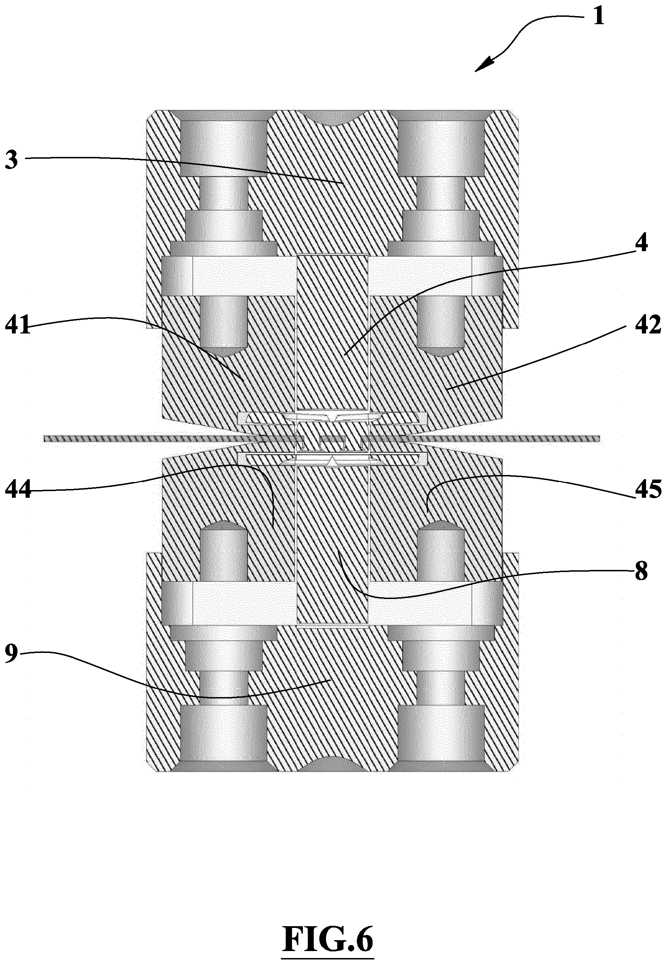

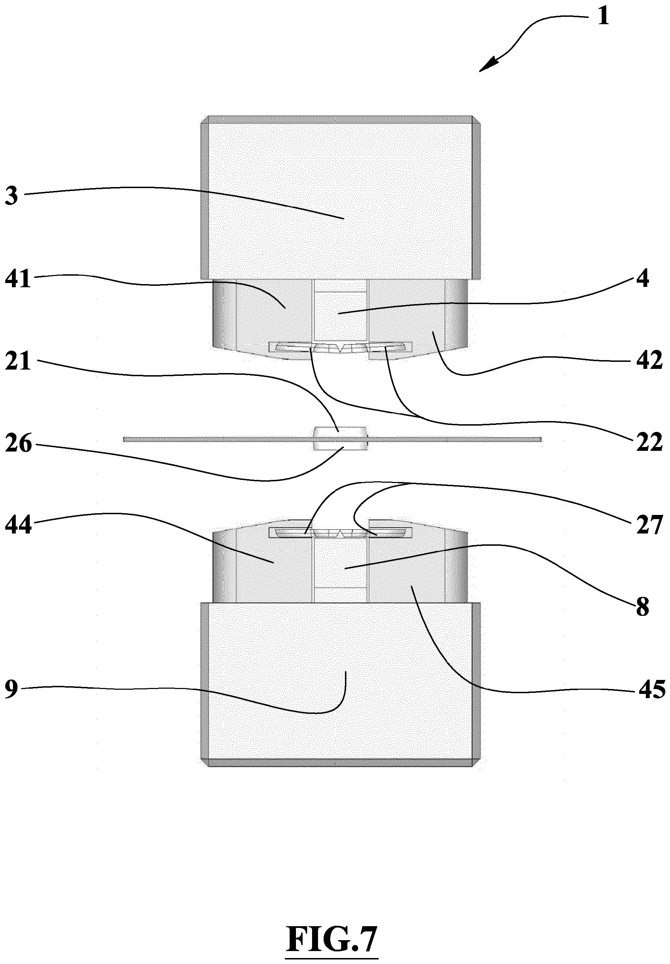

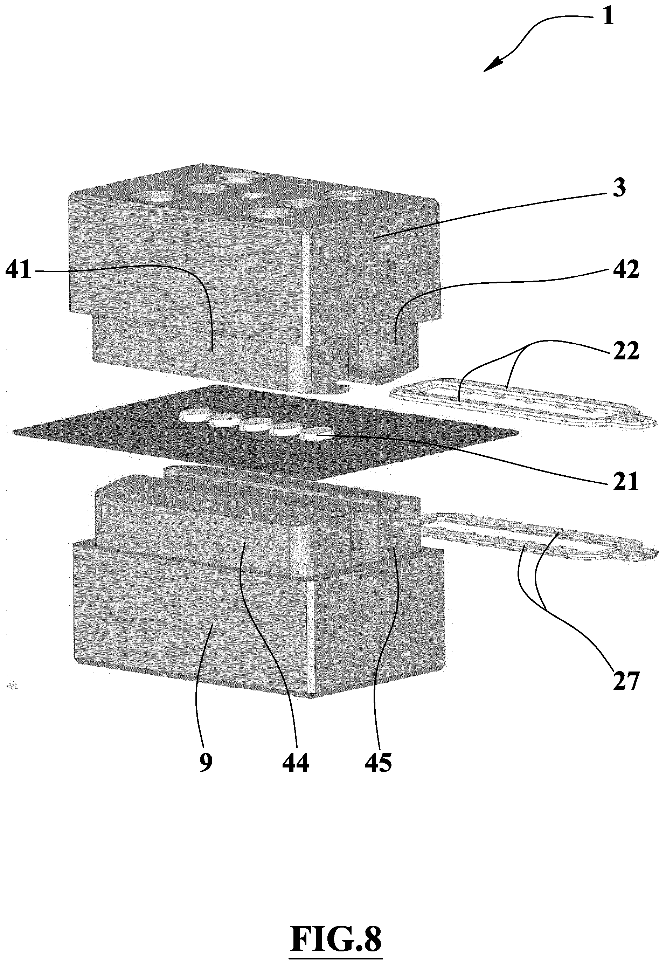

With reference to Figures 1 - 8, with numeral 1 is indicated a method to mount a set of graphic elements on a body.

The word body means the material, consisting for example in a fabric, tissue, non-woven fabric, leather or leather and their substitutes, sheet of plastic, cardboard or metal, intended to receive the assembly of a set of graphic elements.

The graphic elements 21 are fixed by peduncles 29 at a first perimeter frame 22 having two longitudinal sides, where each graphic element 21 is equipped with at least one projecting pin 23 assigned to pass through the body and to engage, and to be fixed into, a respective seat 28 formed in an abutment means 26 corresponding to the graphical element 21 where each of the set of said abutment means 26 is fixed by respective peduncles to a corresponding second frame 27 having two perimetric longitudinal sides where each set of graphic elements 21 fixed to the respective first frame 22 constitutes a plate 20 and where the set of corresponding abutment means 26 with the respective second frame 27 constitutes a counter-plate 25; this method comprises the following steps:
- positioning a plate 20 and a counter-type plate 25 mutually spaced and facing so that each pin 23 is aligned with a respective seat 28;
- inserting the body between the plate 20 and the respective counter-plate 25;
- translating along the alignment direction the set of graphic elements 21 of the plate 20 and/or the set of abutment means 26 of the corresponding counter-plate 25 until the pins 23 cross the body and engage the seat 28;
- fixing the pin 23 in their seats 28 blocking the graphic elements 21 to the body;
- separating the sets of graphic elements 21 and of abutment means 26 from the respective first and second frames 22, 27 by shifting the latters with respect to said graphic elements 21 and abutment means 26 in a transverse direction in respect to the peduncles 29 shearing them;
- performing said separation during the translation and before the crossing of the body by the pin 23.

Before the translating and engagement step of the seats 28 by the pin 23, to perform a locking steps of the first frame 22 and of the second frame 27 to a predetermined mutual distance and the set of graphic elements 21 and the set of abutment means 26 translate to obtain the engagement of the pins 23 in the seats 28 and the shearing the peduncles 29.

In the preferred embodiment, the shearing of the peduncles is carried out immediately before the crossing of the pins through the body.

The peduncles bear pre-fractures or breaking notches made adjacent or in contact with said graphic elements 21 and/or adjacent or in contact with said abutment means 26 or, before the positioning step, it is provided an additional step of realization of said pre-breaking notches or fractures.

Before the insertion step of the body between the plate 20 and the respective counter-plate 25, can be performed a perforation step of the body to allow or to facilitate the pins 23 passage through said body.

Is used a plate 20 and/or a counter-plate 25 made of at least one among metal, metal alloys, plastic material, resin, synthetic or natural material.

The fixing step of the pins into the respective seats is carried out by one among riveting, clinching, heat welding, gluing, or other.

The machine for the assembly of a set of graphical elements on a body comprises:
- a first support means 2 provided with two respective members 41, 42, independent or mutually fixed, parallel, spaced apart and provided with respective first longitudinal seats 16 assigned to accommodate and to support said longitudinal sides of the first frame 22 of the plate 20;
- a first pushing means 4 interposed between the two members 41, 42 of the first support means 2 and having an end assigned to abut with the set of graphic elements 21 of the plate 20 supported by the first longitudinal seats 16 of the first support means 2;
- first moving means assigned to move at least the first pushing means 4 in an actuation direction parallel to the pins 23 of the plate 20, direction that is perpendicular to the plane defined by the first longitudinal seats 16 of the first support means 2;
- first translation means assigned to allow the sliding of the members 41, 42 of the first support means 2 at least in respect to the first pushing means 4 in a direction parallel to the direction of actuation;
- a second support means 7 provided with two respective members 44, 45, independent or mutually fixed, parallel, spaced apart and provided with respective second longitudinal seats 17 assigned to accommodate and support said longitudinal sides of the second frame 27 of the counter-plate 25;
- a second pushing means 8 interposed between the two members 44, 45 of the second support means 7 and having an end assigned to abut with the set of abutment means 26 of the counter-plate 25 supported by the second longitudinal seats 17 of the second support means 7;
- second translation means assigned to allow the sliding of the members 44, 45 of the second support means 7 at least in respect to the second pushing means 8 in a direction parallel to the direction of actuation of the first pushing means 4.

Said machine comprises second moving means assigned to move at least the second pushing means 8 in an actuation direction parallel to the direction of actuation of the first pushing means 4.

In the preferred embodiment the pushing means 4 and 8 have complementary shaped portions for the graphic elements 21 and the abutment means 26. These shapes allow a better grip between the pushing means 4 and 8 and respectively the graphic elements 21 and the abutment means 26, allowing cutting of the peduncles 29 immediately before the step of insertion of the pins into the body and the engagement of the pins 23 into the respective seats 28.

The first and/or second moving means are linear actuators of the electric, pneumatic or hydraulic type, and at least one of the translating means first and/or second comprises an elastic means 18, 19 acting between a support fixed to the pushing means first 4 and/or second 8 and the members 41, 42 of the first support means 2 and/or the members 44, 45 of the second support means 7 for acting on these members 41, 42, 44, 45 with an elastic force of mutual approach of the support means 2, 7 according to the actuating direction.

In alternative, the first and/or translating means comprise actuators of electrical, pneumatic or hydraulic kind for moving respectively, the members 41, 42 of the first support means 2 and the members 44, 45 of the second support means 7 in the actuating direction.

The portions of the members 41, 42 of the first support means 2 facing to the members 44, 45 of the second support means 7 have respective first projecting means 14 and that the portions of the members 44, 45 of the second support means 7 facing to the members 41, 42 of the first support means 2 have respective second projecting means 15 facing to the first 14 where the first 14 and second 15 projecting means are assigned to abut with the respective faces of the body at least as a result of the movement of the moving means first and/or second for the mutual approaching of the first 16 and second 17 longitudinal seats.

An advantage of the present invention is to provide a machine that reduces the operations of riveting of the elements.

A further advantage of the present invention is to provide a machine that detaches the support elements from graphic elements.

A further advantage of the present invention is to provide a machine that reduces the deformations on graphics.

A further advantage of the present invention is to provide a machine that can automate the machining process.

## Claims

1. Method to mount a set of graphic elements (21) on a body such as a fabric, non-woven fabric, leather or leather substitutes, plastic sheet, cardboard or metal assigned to receive such set of graphics elements (21) fixed by first peduncles to a first frame (22) having two perimetral longitudinal sides; where each graphic element (21) is provided with at least one projecting pin (23) assigned to pass through the body and to engage a, and to be fixed into, a respective seat (28) formed in an abutment means (26) corresponding to the graphical element (21) where each of the set of said abutment means (26) is fixed by respective second peduncles to a corresponding second frame (27) having two perimetral longitudinal sides; where each set of graphic elements (21) fixed to the respective first frame (22) constitutes a plate (20) and where the set of corresponding abutment means (26) with the respective second frame (27) constitutes a counter-plate (25); this method is **characterized in that** it comprises the following steps:
- positioning a plate (20) and a counter-type plate (25) mutually spaced and facing so that each pin (23) is aligned with a respective seat (28);
- inserting the body between the plate (20) and the respective counter-plate (25);
- translating along the alignment direction the set of graphic elements (21) of the plate (20) and/or the set of abutment means (26) of the corresponding counter-plate (25) until the crossing of the body and engagement of the seat (28) by the pin (23);
- fixing the pin (23) in their seats (28) blocking the graphic elements (21) to the body;
- separating the sets of graphic elements (21) and of abutment means (26) from the respective first and second frames (22, 27) by shifting the latters with respect to said graphic elements (21) and abutment means (26) in a transverse direction in respect to the peduncles (29) shearing them;
- perform said separation during the translation and before the crossing of the body by the pin (23).

2. Method according to claim 1 **characterized in that**: before the translating and engagement step of the seats (28) by the pin (23), perform a locking steps of the first frame (22) and of the second frame (27) to a predetermined mutual distance and translating the set of graphic elements (21) and the set of abutment means (26) to obtain the engagement of the pins (23) in the seats (28) and the shearing the peduncles (29).

3. Method according to claim 1 or 2 **characterized in that**: use peduncles (29) bearing pre-fractures or breaking notches made adjacent or in contact with said graphic elements (21) and/or said abutment means (26) or, before the positioning step, perform a steps of realization of said pre-breaking notches or fractures.

4. Method according to any of the previous claims **characterized in that**: it comprises, before the insertion step of the body between the plate (20) and the respective counter-plate (25), a perforation step of the body to allow or facilitate the pins (23) passage through said body.

5. Method according to any of the previous claims **characterized in that**: to use of a plate (20) and/or a counter-plate (25) made of at least one among metal, metal alloys, plastic material, resin, synthetic or natural material and/or to carry out the fixing step by one among riveting, clinching, heat welding, or gluing.

6. A machine for mounting, according to the method of any one of the preceding claims, a set of graphic elements on a body consisting for example in a fabric, non-woven fabric, leather or leather and substitutes, plastic sheet, cardboard or metal; said body is assigned to receive such graphic elements (21) fixed by peduncles (29) to a first frame (22) having two perimetral longitudinal sides; where each graphic element (21) is provided with at least one projecting pin (23) assigned to pass through the body and to engage a, and to be fixed into a, respective seat (28) formed in an abutment means (26) of the corresponding graphical element (21) where each of set of said abutment means (26) is fixed by respective peduncles (29) to a corresponding second frame (27) having two perimetral longitudinal sides; where each set of graphic elements (21) fixed to the respective first frame (22) constitutes a plate (20) and where the set of corresponding abutment means (26) with the respective second frame (27) constitutes a counter-plate (25); such machine is **characterized in that** it comprises:
- a first support means (2) provided with two respective members (41, 42), independent or mutually fixed, parallel, spaced apart and provided with respective first longitudinal seats (16) assigned to accommodate and support said longitudinal sides of the first frame (22) of the plate (20);
- a first pushing means (4) interposed between the two members (41, 42) of the first support means (2) and having an end assigned to abut with the set of graphic elements (21) of the plate (20) supported by the first longitudinal seats (16) of the first support means (2);
- first moving means assigned to move at least the first pushing means (4) in an actuation direction parallel to the pins (23) of the plate (20), direction that is perpendicular to the plane defined by the first longitudinal seats (16) of the first support means (2);
- first translation means assigned to allow the sliding of the members (41, 42) of the first support means (2) at least in respect to the first pushing means (4) in a direction parallel to the direction of actuation;
- a second support means (7) provided with two respective members (44, 45), independent or mutually fixed, parallel, spaced apart and provided with respective second longitudinal seats (17) assigned to accommodate and support said longitudinal sides of the second frame (27) of the counter-plate (25);
- a second pushing means (8) interposed between the two members (44, 45) of the second support means (7) and having an end assigned to abut with the set of abutment means (26) of the counter-plate (25) supported by the second longitudinal seats (17) of the second support means (7);
- second translation means assigned to allow the sliding of the members (44, 45) of the second support means (7) at least in respect to the second pushing means (8) in a direction parallel to the direction of actuation of the first pushing means (4).

7. Machine according to claim 6 **characterized in that** it comprises second moving means assigned to move at least the second pushing means (8) in an actuation direction parallel to the direction of actuation of the first pushing means (4).

8. Machine according to claim 7 **characterized in that** the first and/or second moving means are linear actuators of the electric, pneumatic or hydraulic type, and **characterized in that** at least one of the translating means first and/or second comprises an elastic means acting between a support fixed to the pushing means first (4) and/or second (8) and the members (41, 42) of the first support means (2) and/or the members (44, 45) of the second support means (7) for acting on these members (41, 42, 44, 45) with an elastic force of mutual approach of the support means (2, 7) according to the actuating direction.

9. Machine according to claim 7 **characterized in that** the first and/or second moving means are linear actuators of the electric, pneumatic or hydraulic type, and **characterized in that** the first and/or translating means comprise actuators of electrical, pneumatic or hydraulic kind for moving respectively, the members (41, 42) of the first support means (2) and the members (44, 45) of the second support means (7) in the actuating direction.

10. Machine according to claim 8 **characterized in that** the portions of the members (41, 42) of the first support means (2) facing to the members (44, 45) of the second support means (7) have respective first projecting means (14) and that the portions of the members (44, 45) of the second support means (7) facing to the members (41, 42) of the first support means (2) have respective second projecting means (15) facing to the first (14) where the first (14) and second (15) projecting means are assigned to abut with the respective faces of the body at least as a result of the movement of the moving means first and/or second for the mutual approaching of the first (16) and second (17) longitudinal seats.

## Patentansprüche

1. Verfahren zum Anbringen eines Satzes grafischer Elemente (21) an einem Körper, wie beispielsweise einem Stoff, nicht-gewebten Stoff, Leder oder Lederersatz, Kunststofflage, Karton oder Metall, der zugeordnet ist, um einen solchen Satz von grafischen Elementen aufzunehmen, der durch erste Stiele an einem ersten Rahmen (22) mit zwei begrenzenden Längsseiten befestigt ist;
wobei jedes grafische Element (21) mit zumindest einem vorstehenden Stift (23) versehen ist, der zugeordnet ist, um durch den Körper zu verlaufen und in einen jeweiligen Sitz (28) einzugreifen und in diesem befestigt zu werden, der in einem Anlagemittel (26) ausgebildet ist, das dem grafischen Element (21) entspricht, wobei jeder dieser Sätze dieser Anlagemittel (26) durch jeweilige zweite Stiele an einem entsprechenden zweiten Rahmen (27) mit zwei begrenzenden Längsseiten befestigt ist;
wobei jeder Satz grafischer Elemente (21), der an dem jeweiligen ersten Rahmen (22) befestigt ist, eine Platte (20) bildet und wobei der Satz entsprechender Anlagemittel (26) mit dem jeweiligen zweiten Rahmen (27) eine Gegenplatte (25) bildet;
dieses Verfahren ist **dadurch gekennzeichnet, dass** es die folgenden Schritte umfasst:
- Anordnen einer Platte (20) und einer Gegenplatte (25) in gegenseitigem Abstand und gegenüberliegend, so dass jeder Stift (23) auf einen jeweiligen Sitz (28) ausgerichtet ist;
- Einsetzen des Körpers zwischen die Platte (20) und die jeweilige Gegenplatte (25);
- Übertragen des Satzes grafischer Elemente (21) der Platte (20) und/oder des Satzes Anlagemittel (26) der entsprechenden Gegenplatte (25) entlang der Ausrichtungsrichtung bis zu der Durchquerung des Körpers und dem Eingriff des Sitzes (28) durch den Stift (23);
- Befestigen des Stiftes (23) in seinen Sitzen (28), um die grafischen Elemente (21) an den Körper zu klemmen;
- Trennen der Sätze grafischer Elemente (21) und Anlagemittel (26) von dem jeweiligen ersten und zweiten Rahmen (22, 27) durch Verschieben der letzteren in Bezug auf die grafischen Elemente (21) und Anlagemittel (26) in einer Querrichtung in Bezug auf die Stiele (29), um die Stiele (29) abzuscheren;
- Durchführen dieses Trennens während des Übertragens und vor dem Durchqueren des Körpers durch den Stift (23).

2. Das Verfahren gemäß Anspruch 1, **dadurch gekennzeichnet, dass**: vor dem Schritt des Übertragens und Eingreifens der Sitze (28) durch den Stift (23), Durchführen eines Verriegelungsschrittes des ersten Rahmens (22) und des zweiten Rahmens (27) in einen vorbestimmten gegenseitigen Abstand und Übertragen des Satzes grafischer Elemente (21) und des Satzes Anlagemittel (26), um den Eingriff der Stifte (23) in die Sitze (28) und das Abscheren der Stiele (29) zu erhalten.

3. Das Verfahren gemäß Anspruch 1 oder 2, **dadurch gekennzeichnet, dass**: Verwenden von Stielen (29), die Vorbrüche oder Bruchkerben aufweisen, die benachbart oder in Kontakt mit den grafischen Elementen (21) und/oder den Anlagemitteln (26) angebracht sind, oder, vor dem Positionierungsschritt, Durchführen eines Schrittes zur Ausführung der Vorbruchkerben oder -brüche.

4. Das Verfahren gemäß einem der vorhergehenden Ansprüche, **dadurch gekennzeichnet, dass**:
es vor dem Schritt des Einsetzens des Körpers zwischen die Platte (20) und die jeweilige Gegenplatte (25) einen Schritt des Perforierens des Körpers umfasst, um den Stiften (23) einen Durchgang durch den Körper zu ermöglichen oder zu vereinfachen.

5. Das Verfahren gemäß einem der vorhergehenden Ansprüche, **dadurch gekennzeichnet, dass**:
Verwenden einer Platte (20) und/oder einer Gegenplatte (25) aus zumindest einem der folgenden Materialien: Metall, Metalllegierungen, Kunststoff, Harz, synthetisches oder natürliches Material, und/oder Durchführen des Befestigungsschrittes mittels eines der folgenden Verfahren: Nieten, Clinchen, Wärmeschweißen oder Kleben.

6. Eine Vorrichtung zum Anbringen, gemäß dem Verfahren eines der vorhergehenden Ansprüche, eines Satzes grafischer Elemente an einem Körper, der zum Beispiel aus einem Stoff, nicht-gewebten Stoff, Leder oder Lederersatz, Kunststofflage, Karton oder Metall besteht;
der Körper ist zugeordnet, um diese grafischen Elemente (21) aufzunehmen, die durch Stiele (29) an einem ersten Rahmen (22) mit zwei begrenzenden Längsseiten befestigt sind;
wobei jedes grafische Element (21) mit zumindest einem vorstehenden Stift (23) versehen ist, der zugeordnet ist, um durch den Körper zu verlaufen und in einen jeweiligen Sitz (28) einzugreifen und in diesem befestigt zu werden, der in einem Anlagemittel (26) ausgebildet ist, das dem grafischen Element (21) entspricht, wobei jeder dieser Sätze dieses Anlagemittels (26) durch jeweilige Stiele an einem entsprechenden zweiten Rahmen (27) mit zwei begrenzenden Längsseiten befestigt ist;
wobei jeder Satz grafischer Elemente (21), der an dem jeweiligen ersten Rahmen (22) befestigt ist, eine Platte (20) bildet und wobei der Satz entsprechender Anlagemittel (26) mit dem jeweiligen zweiten Rahmen (27) eine Gegenplatte (25) bildet;
eine solche Vorrichtung ist **dadurch gekennzeichnet, dass** sie umfasst:
- ein erstes Stützmittel (2), das mit zwei jeweiligen, unabhängigen oder gegenseitig feststehenden, parallelen, voneinander beabstandeten Teilen (41, 42) und mit entsprechenden ersten Längssitzen (16) versehen ist, die zugeordnet sind, um die Längsseiten des ersten Rahmens (22) der Platte (20) aufzunehmen und zu stützen;
- ein erstes Stoßmittel (4), das zwischen den beiden Teilen (41, 42) des ersten Stützmittels (2) angebracht ist und ein Ende aufweist, das zugeordnet ist, um mit dem Satz grafischer Elemente (21) der Platte (20), die von den ersten Längssitzen (16) des ersten Stützmittels (2) getragen werden, in Anlage zu gelangen;
- erste Bewegungsmittel, die zugeordnet sind, um zumindest das erste Stoßmittel (4) in einer Betätigungsrichtung parallel zu den Stiften (23) der Platte (20) zu bewegen, wobei die Richtung senkrecht zu der Ebene ist, die durch die ersten Längssitze (16) des ersten Stützmittels (2) definiert ist;
- erste Übertragungsmittel, die zugeordnet sind, um das Gleiten der Teile (41, 42) des ersten Stützmittels (2) zumindest in Bezug auf das erste Stoßmittel (4) in einer Richtung parallel zur Betätigungsrichtung zu ermöglichen;
- ein zweites Stützmittel (7), das mit zwei jeweiligen Teilen (44, 45) versehen ist, die unabhängig oder gegenseitig feststehend, parallel, beabstandet und mit entsprechenden zweiten Längssitzen (17) versehen sind, die zugeordnet sind, um die Längsseiten des zweiten Rahmens (27) der Gegenplatte (25) aufzunehmen und zu stützen;
- ein zweites Stoßmittel (8), das zwischen den beiden Teilen des zweiten Stützmittels (7) angebracht ist und ein Ende aufweist, das zugeordnet ist, um mit dem Satz Anlagemittel (26) der Gegenplatte (25), die von den zweiten Längssitzen (17) des zweiten Stützmittels (7) gestützt wird, in Anlage zu gelangen;
- zweite Übertragungsmittel, die zugeordnet sind, um das Gleiten der Teile (44, 45) des zweiten Stützmittels (7) zumindest in Bezug auf das zweite Stoßmittel (8) in einer Richtung parallel zur Betätigungsrichtung des ersten Stoßmittels (4) zu ermöglichen.

7. Die Vorrichtung gemäß Anspruch 6, **dadurch gekennzeichnet, dass** sie zweite Bewegungsmittel umfasst, die zugeordnet sind, um zumindest das zweite Stoßmittel (8) in einer Betätigungsrichtung parallel zu der Betätigungsrichtung des ersten Stoßmittels (4) zu bewegen.

8. Die Vorrichtung gemäß Anspruch 7, **dadurch gekennzeichnet, dass** das erste und/oder zweite Bewegungsmittel elektrische, pneumatische oder hydraulische Linearstellglieder sind, und **dadurch gekennzeichnet, dass** mindestens eines der ersten und/oder zweiten Übertragungsmittel ein elastisches Mittel umfasst, das zwischen einer an dem ersten (4) und/oder zweiten Stoßmittel (8) befestigten Stütze und den Teilen (41, 42) des ersten Stützmittels (2) und/oder den Elementen (44, 45) des zweiten Stützmittels (7) wirkt, um auf diese Teile (41, 42, 44, 45) mit einer elastischen Kraft der gegenseitigen Annäherung der Stützmittel (2, 7) entsprechend der Betätigungsrichtung zu wirken.

9. Die Vorrichtung gemäß Anspruch 7, **dadurch gekennzeichnet, dass** das erste und/oder zweite Bewegungsmittel elektrische, pneumatische oder hydraulische Linearstellglieder sind, und **dadurch gekennzeichnet, dass** die ersten und/oder Übertragungsmittel elektrische, pneumatische oder hydraulische Antriebe aufweisen, um jeweils die Teile (41, 42) des ersten Stützmittels (2) und die Teile (44, 45) des zweiten Stützmittels (7) in der Betätigungsrichtung zu bewegen.

10. Die Vorrichtung gemäß Anspruch 8, **dadurch gekennzeichnet, dass** die Bereiche der Teile (41, 42) des ersten Stützmittels (2), die den Elementen (44, 45) des zweiten Stützmittels (7) zugewandt sind, jeweils erste vorstehende Mittel (14) aufweisen, und dass die Bereiche der Elemente (44, 45) des zweiten Stützmittels (7) die den Teilen (41, 42) des ersten Stützmittels (2) zugewandt sind, jeweils ein zweites vorstehendes Mittel (15) aufweisen, das dem ersten vorstehenden Mittel (14) zugewandt ist, wobei das erste vorstehende Mittel (14) und das zweite vorstehende Mittel (15) zugeordnet sind, um mit den jeweiligen Flächen des Körpers zumindest infolge der Bewegung des ersten und/oder zweiten Bewegungsmittels für die gegenseitige Annäherung des ersten (16) und des zweiten Längssitzes (17) in Anlage zu gelangen.

## Revendications

1. Procédé de montage d'un ensemble d'éléments graphiques (21) sur un corps tel qu'une étoffe, un non-tissé, du cuir ou des substituts du cuir, une feuille de matière plastique, du carton ou du métal, prévu pour recevoir un tel ensemble d'éléments graphiques (21) fixé par des premiers pédoncules à un premier cadre (22) ayant deux côtés longitudinaux périphériques ; chaque élément graphique (21) étant muni d'au moins un ergot en saillie (23) prévu pour passer à travers le corps et pour s'engager à, et être fixé dans, un siège respectif (28) formé dans un moyen de butée (26) correspondant à l'élément graphique (21), chacun de l'ensemble desdits moyens de butée (26) étant fixé par des seconds pédoncules respectifs à un second cadre correspondant (27) ayant deux côtés longitudinaux périphérique ; chaque ensemble d'éléments graphiques (21) fixé au premier cadre respectif (22) constituant une plaque (20) et l'ensemble de moyens de butée correspondants (26) avec le second cadre respectif (27) constituant une contreplaque (25) ; ce procédé est **caractérisé par le fait qu'**il comprend les étapes suivantes :
- positionner une plaque (20) et une contreplaque (25) espacées l'une de l'autre et se faisant face de telle sorte que chaque ergot (23) est aligné avec un siège respectif (28) ;
- introduire le corps entre la plaque (20) et la contreplaque respective (25) ;
- déplacer en translation, le long de la direction d'alignement, l'ensemble d'éléments graphiques (21) de la plaque (20) et/ou l'ensemble de moyens de butée (26) de la contreplaque correspondante (25) jusqu'à la traversée du corps et l'engagement du siège (28) par l'ergot (23) ;
- fixer les ergots (23) dans leurs sièges (28), bloquant les éléments graphiques (21) sur le corps ;
- séparer les ensembles d'éléments graphiques (21) et de moyens de butée (26) à partir des premier et second cadres respectifs (22, 27) par décalage de ces derniers par rapport audits éléments graphiques (21) et auxdits moyens de butée (26) dans une direction transversale par rapport aux pédoncules (29), les cisaillant ;
- effectuer ladite séparation pendant la translation et avant la traversée du corps par l'ergot (23).

2. Procédé selon la revendication 1, **caractérisé par le fait que** : avant l'étape de translation et d'engagement des sièges (28) par l'ergot (23), effectuer une étape de verrouillage du premier cadre (22) et du second cadre (27) à une distance mutuelle prédéterminée et déplacer en translation l'ensemble d'éléments graphiques (21) et l'ensemble de moyens de butée (26) pour obtenir l'engagement des ergots (23) dans les sièges (28) et le cisaillement des pédoncules (29).

3. Procédé selon la revendication 1 ou 2 **caractérisé par le fait que** : on utilise des pédoncules (29) portant des pré-fractures ou des encoches de rupture réalisées adjacentes ou en contact avec lesdits éléments graphiques (21) et/ou lesdits moyens de butée (26) ou, avant l'étape de positionnement, effectuer une étape de réalisation desdites encoches ou fractures de pré-rupture.

4. Procédé selon l'une quelconque des revendications précédentes, **caractérisé par le fait que** : il comprend, avant l'étape d'introduction du corps entre la plaque (20) et la contreplaque respective (25), une étape de perforation du corps pour permettre ou faciliter le passage des ergots (23) à travers ledit corps.

5. Procédé selon l'une quelconque des revendications précédentes, **caractérisé par le fait que** : on utilise une plaque (20) et/ou une contreplaque (25) faites d'au moins un parmi du métal, des alliages métalliques, une matière plastique, de la résine, une matière synthétique ou naturelle et/ou on effectue l'étape de fixation par l'un parmi un rivetage, un clinchage, un thermosoudage ou un collage.

6. Machine pour monter, selon le procédé selon l'une quelconque des revendications précédentes, un ensemble d'éléments graphiques sur un corps constitué par exemple d'un textile, d'un non-tissé, de cuir ou de substituts du cuir, d'une feuille de matière plastique, de carton ou de métal ; ledit corps étant prévu pour recevoir de tels éléments graphiques (21) fixés par des pédoncules (29) à un premier cadre (22) ayant deux côtés longitudinaux périphériques ; chaque élément graphique (21) étant muni d'au moins un ergot en saillie (23) prévu pour passer à travers le corps et pour s'engager à, et être fixée dans, un siège respectif (28) formé dans un moyen de butée (26) de l'élément graphique correspondant (21), chacun de l'ensemble desdits moyens de butée (26) étant fixé par des pédoncules respectifs (29) à un second cadre correspondant (27) ayant deux côtés longitudinaux périphériques ; chaque ensemble d'éléments graphiques (21) fixé au premier cadre respectif (22) constituant une plaque (20) et l'ensemble de moyens de butée correspondants (26) avec le second cadre respectif (27) constituant une contreplaque (25) ; une telle machine étant **caractérisée par le fait qu'**elle comprend :
- un premier moyen de support (2) muni de deux éléments respectifs (41, 42), indépendants ou fixés mutuellement, parallèles, espacés l'un de l'autre et munis de premiers sièges longitudinaux respectifs (16) prévus pour recevoir et supporter lesdits côtés longitudinaux du premier cadre (22) de la plaque (20) ;
- un premier moyen de poussée (4) interposé entre les deux éléments (41, 42) du premier moyen de support (2) et ayant une extrémité prévue pour venir en butée avec l'ensemble d'éléments graphiques (21) de la plaque (20) supportée par les premiers sièges longitudinaux (16) du premier moyen de support (2) ;
- des premiers moyens de déplacement prévus pour déplacer au moins le premier moyen de poussée (4) dans une direction d'actionnement parallèle aux ergots (23) de la plaque (20), direction qui est perpendiculaire au plan défini par les premiers sièges longitudinaux (16) du premier moyen de support (2) ;
- des premiers moyens de translation prévus pour permettre le coulissement des éléments (41, 42) du premier moyen de support (2) au moins par rapport au premier moyen de poussée (4) dans une direction parallèle à la direction d'actionnement ;
- un second moyen de support (7) muni de deux éléments respectifs (44, 45), indépendants ou fixés mutuellement, parallèles, espacés et munis de seconds sièges longitudinaux respectifs (17) prévus pour recevoir et supporter lesdits côtés longitudinaux du second cadre (27) de la contreplaque (25) ;
- un second moyen de poussée (8) interposé entre les deux éléments (44, 45) du second moyen de support (7) et ayant une extrémité prévue pour venir en butée avec l'ensemble de moyens de butée (26) de la contreplaque (25) supportée par les seconds sièges longitudinaux (17) du second moyen de support (7) ;
- des seconds moyens de translation prévus pour permettre le coulissement des éléments (44, 45) du second moyen de support (7) au moins par rapport au second moyen de poussée (8) dans une direction parallèle à la direction d'actionnement du premier moyen de poussée (4).

7. Machine selon la revendication 6, **caractérisée par le fait qu'**elle comprend des seconds moyens de déplacement prévus pour déplacer au moins le second moyen de poussée (8) dans une direction d'actionnement parallèle à la direction d'actionnement du premier moyen de poussée (4).

8. Machine selon la revendication 7, **caractérisée par le fait que** les premiers et/ou les seconds moyens de déplacement sont des actionneurs linéaires du type électrique, pneumatique ou hydraulique, et **caractérisée par le fait qu'**au moins un des premiers et seconds moyens de translation comprend un moyen élastique agissant entre un support fixé au moyen de poussée, le premier (4) et/ou le second (8), et les éléments (41, 42) du premier moyen de support (2) et/ou les éléments (44, 45) du second moyen de support (7) pour agir sur ces éléments (41, 42, 44, 45) avec une force élastique d'approche mutuelle des moyens de support (2,7) selon la direction d'actionnement.

9. Machine selon la revendication 7, **caractérisée par le fait que** les premiers et/ou les seconds moyens de déplacement sont des actionneurs linéaires du type électrique, pneumatique ou hydraulique, et **caractérisée par le fait que** les premiers et/ou les seconds moyens de translation comprennent des actionneurs du genre électrique, pneumatique ou hydraulique pour déplacer, respectivement, les éléments (41, 42) du premier moyen de support (2) et les éléments (44, 45) du second moyen de support (7) dans la direction d'actionnement.

10. Machine selon la revendication 8, **caractérisée par le fait que** les parties des éléments (41, 42) du premier moyen de support (2) faisant face aux éléments (44, 45) du second moyen de support (7) ont des premiers moyens en saillie respectifs (14) et que les parties des éléments (44, 45) du second moyen de support (7) faisant face aux éléments (41, 42) du premier moyen de support (2) ont des seconds moyens en saillie respectifs (15) faisant face aux premiers (14), les premiers (14) et les seconds (15) moyens en saillie étant prévus pour venir en butée avec les faces respectives du corps au moins par suite du mouvement des premiers et/ou seconds moyens de déplacement pour l'approche mutuelle des premiers (16) et seconds (17) sièges longitudinaux.
